# EUROPEAN PATENT APPLICATION

(11) **EP 1 280 287 A1**
(43) Date of publication of application: **29.01.2003**
(21) Application number: 02255144.4
(22) Date of filing: 23.07.2002
(51) Int. Cl.: H04B 7/08

(54) **Composite radio apparatus and diversity switching method**

(30) Priority: 23.07.2001 JP 2001221603; 19.07.2002 JP 2002210610
(71) Applicant: Matsushita Electric Industrial Co., Ltd., Kadoma-shi, Osaka (JP)
(72) Inventor: Hoshi, Yoshiyuki, Yokohama-shi, Kanagawa 246-0025 (JP)
(74) Representative: Rackham, Stephen Neil

(57) **Abstract**

A composite radio apparatus having two radio systems (11,12), comprises two antennas (15,16) to be shared for a diversity operation of the two radio systems, and two antenna changeover switches (13,14) for switching the two antennas(15,16). The two antenna changeover switches (13,14) serve to directly connect the two antennas (15,16) to respective input/output sections of the two radio systems (11,12). In the composite radio apparatus according to the invention, the two antenna changeover switches (11,12) are operated such that one of the antenna changeover switches (13) connects one (15) of the two antennas to the input/output section of one (11) of the two radio systems when the other antenna changeover switch (14) connects the other antenna (16) to the input/output section of the other radio system (12).

## Description

The present invention relates to a composite radio apparatus including two radio systems, and more particularly to a composite radio apparatus for carrying out a diversity operation in the respective radio systems. Moreover, the invention relates to a diversity switching method in the composite radio apparatus.

In a radio communication, there has been employed a diversity technique in order to cope with fluctuation in the receiving signal power. According to the diversity technique, a plurality of antennas are connected to a radio apparatus such as a radio base station or a mobile terminal, so that it is switched into an antenna receiving a high receiving signal power depending on the fluctuation in the received power which is caused by fading to perform the communication, and the received radio wave signals are synthesized. In particular, there has been widely used an antenna switching type diversity receiving method which can be implemented with a simple circuit structure at a low cost.

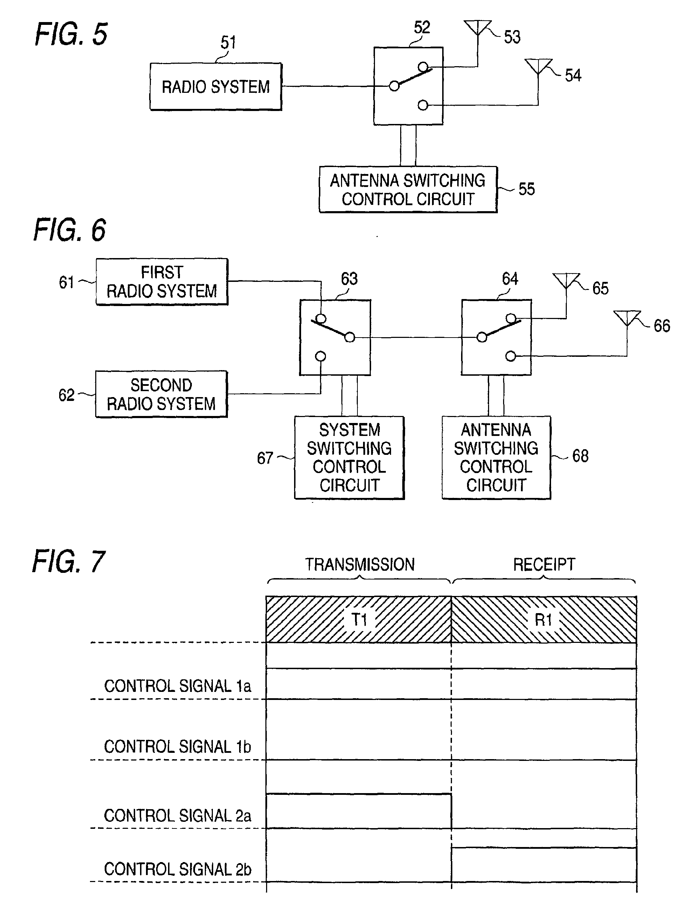

Fig. 5 is a diagram showing the schematic structure of a radio apparatus capable of carrying out a diversity reception. In Fig. 5, an antenna changeover switch 52 serves to switch a first antenna 53 and a second antenna 54 and to connect them to the input/output section (not shown) of a radio system 51. The antenna changeover switch 52 is switched in response to switching signals 55a and 55b sent from an antenna switching control circuit 55. The control signal 55a and the control signal 55b have an inversion relationship and serve to connect the first antenna 53 and the radio system 51, and the second antenna 54 and the radio system 51 separately. The reason why the separate control signals are sent is that it might be necessary to set a rise time and a fall time for a time sharing slot individually in respect of the characteristic of the radio system. In this respect, another antenna changeover switch, which will be described below, has the same possibility. Separate control signals are sent, respectively. The radio apparatus in Fig. 5 switches the antenna changeover switch 52 in response to the control signals 55a and 55b and always carries out a receipt while retrieving the first antenna 53 or the second antenna 54 which has a higher received signal level in the case in which the diversity operation is to be executed.

In a composite radio apparatus having two radio systems employing the diversity receiving method, the diversity operation can be carried out by using a common antenna.

Fig. 6 is a diagram showing the schematic structure of a composite radio apparatus having two radio systems capable of carrying out the diversity reception. The composite radio apparatus in Fig. 6 includes a first radio system 61 and a second radio system 62 which carry out different radio communications, and a first antenna 65 and a second antenna 66 are switched and connected to input-output sections (not shown) of the first radio system 61 and the second radio system 62 by means of a system changeover switch 63 and an antenna changeover switch 64. The system changeover switch 63 is switched in response to control signals 1a and 1 sent from a system switching control circuit 67 and the antenna changeover switch 64 is switched in response to control signals 2a and 2b sent from an antenna switching control circuit 68.

The control signal 1a serves to select the first radio system 61 and the control signal 1b serves to select the second radio system 62. More specifically, the control signal 1a is set to be H and the control signal 1b is set to be L in the case that the first radio system 61 is to be selected, whereas the control signal 1a is set to be L and the control signal 1b is set to be H in the case in that the second radio system 62 is to be selected. Moreover, the control signal 2a serves to select the first antenna 65 and the control signal 2b serves to select the second antenna 66. More specifically, the first antenna 65 is selected when the control signal 2a is H and the control signal 2b is L, whereas the second antenna 66 is selected when the control signal 2a is L and the control signal 2b is H.

Next, the operation of the composite ratio machine in Fig. 6 will be described. First of all, the system changeover switch 63 is switched to the radio system side to be used in response to the control signals 1a and 1b in order to select the ratio system for carrying out the diversity reception. In the case that the diversity operation is to be carried out in this state, the antenna changeover switch 64 is switched in response to the control signals 2a and 2b and a receipt is always performed while retrieving the first antenna 65 or the second antenna 66 which has a higher received signal level.

Fig. 7 is a diagram showing the state of the control signals 1a, 1b, 2a and 2b in the case in which the radio system is switched and the antenna is changed over in the composite radio apparatus of Fig. 6. Fig. 7 shows a time sharing operation in a transmitting slot T1 and a receiving slot R1 in the case in which the first radio system 61 is being operated, and the first antenna 65 is selected at time of a transmission and the second antenna 66 is selected at time of a receipt. More specifically, in the transmitting slot T1, the control signal 1a is set to be H, the control signal 1b is set to be L, the control signal 2a is set to be H and the control signal 2b is set to be L so that the first antenna 65 is selected. In the receiving slot R1, moreover, the control signal 1a is set to be H, the control signal 1b is set to be L, the control signal 2a is set to be L and the control signal 2b is set to be H so that the second antenna 66 is selected.

However, the conventional composite radio apparatus is provided with the antenna changeover switch 64 for switching the antenna for the diversity operation and the system changeover switch 63 for radio system switching, and a transmitted/received signal is sent through the two switches including the antenna changeover switch 64 and the system changeover switch 63. Therefore, there is a problem in that a receiving sensitivity is deteriorated due to an increase in a loss corresponding to one switch and a transmitted output is reduced at time of a transmission.

Moreover, it is necessary to separately control the switching operations of the system changeover switch 63 and the antenna changeover switch 64. For this reason, there is also a problem in that four control signals for the switching are required.

The invention has been made to solve the conventional problems and has an object to provide a composite radio apparatus comprising two radio systems and two antennas to be shared for the diversity operation of the two radio systems and capable of reducing a loss in the switching of the antenna and the radio system. Moreover, the invention has another object to provide a diversity switching method capable of reducing a loss in the switching of the antenna and the radio system in the composite radio apparatus.

The invention provides a composite radio apparatus having two radio systems, comprising two antennas to be shared for a diversity operation of the two radio systems, and two antenna changeover switches for switching the two antennas, wherein the two antenna changeover switches serve to directly connect the two antennas to respective input/output sections of the two radio systems.

According to the composite radio apparatus, one switch is passed in a path formed by the antenna and the respective radio systems. Therefore, it is possible to reduce a loss caused by the passage through two switches in the conventional art. Moreover, switching control can easily be carried out.

In the composite radio apparatus according to the invention, the two antenna changeover switches are operated such that one of the antenna changeover switches connects one of the two antennas to the input/output section of one of the two radio systems when the other antenna changeover switch connects the other antenna to the input/output section of the other radio system.

By the execution of such switching, when one of the antennas is connected to one of the radio systems and is thus used, the same antenna is not connected to the other radio system. Therefore, it is possible to prevent an influence such as a reduction in a transmitted signal from being caused by a fluctuation in a load impedance.

In the composite radio apparatus according to the invention, one of the antenna changeover switches serves to connect, by switching, the two antennas to either of the radio systems which is being operated.

By the execution of such switching, it is possible to easily carry out the switching control of the antenna corresponding to a control system which is being operated or is to be operated.

The composite radio apparatus according to the invention further comprises a matching circuit corresponding to the radio system between at least one of the antenna changeover switches and the input/output section of the radio system.

According to the composite radio apparatus, also in the case in which frequencies to be used for the two radio systems included in the composite radio apparatus are different from each other, it is possible to reduce a loss caused by the mismatching of an impedance through the connection switching.

The invention provides a diversity switching method in a composite radio apparatus comprising two radio systems and two antennas to be shared in a diversity operation of the two radio systems, wherein one of the two antennas is directly switched and connected to an input/output section of one of the radio systems which is carrying out the diversity operation and the other antenna is directly switched and connected to an input/output section of the other radio system.

According to the diversity switching method, it is possible to reduce a loss caused by the antenna switching through a simplified control method.

### BRIEF DESCRIPTION OF THE DRAWINGS

Fig. 1 is a diagram showing the schematic structure of a composite radio apparatus according to a first embodiment of the invention;
Fig. 2 is a diagram showing the schematic structure of the composite radio apparatus according to the first embodiment of the invention;
Fig. 3 is a table showing the relationship between control signals corresponding to a radio system to be used and an antenna;
Fig. 4 is a diagram showing the state of the control signal in the composite radio apparatus according to the embodiment of the invention;
Fig. 5 is a diagram showing the schematic structure of a radio apparatus capable of carrying out a diversity reception;
Fig. 6 is a diagram showing the schematic structure of a conventional composite radio apparatus having two radio systems which can carry out the diversity reception; and
Fig. 7 is a diagram showing the state of a control signal in the conventional composite radio apparatus.

An embodiment of the invention will be described below with reference to the drawings.

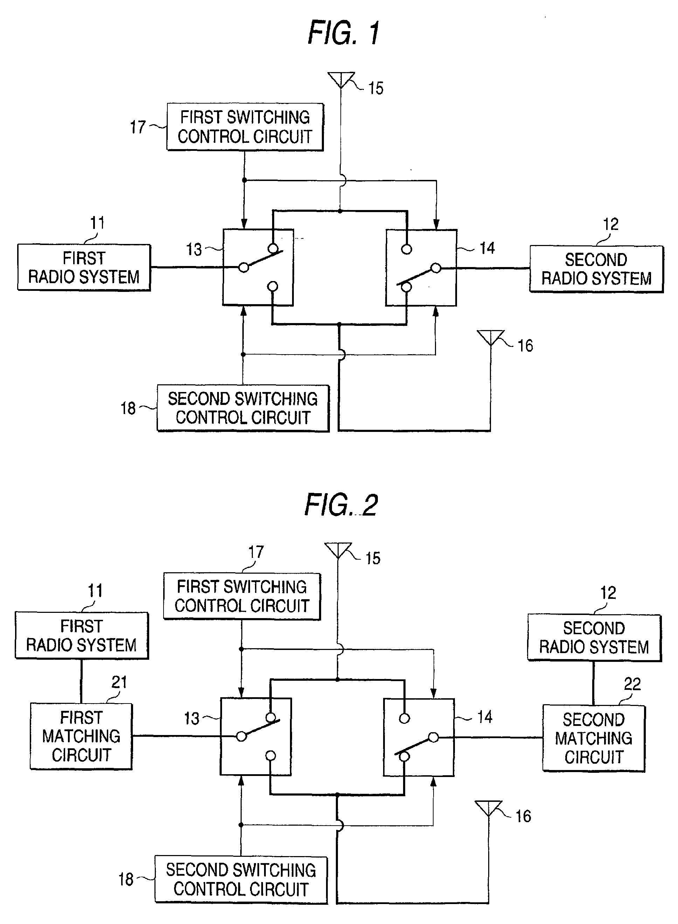

Fig. 1 is a diagram showing the schematic structure of a composite radio apparatus according to a first embodiment of the invention. The composite radio apparatus in Fig. 1 has a first radio system 11 and a second radio system 12 which carry out different radio communications, and a first antenna 15 and a second antenna 16 which are shared for the first radio system and the second radio system. The first antenna 15 and the second antenna 16 are directly switched and connected to an input/output section (not shown) of the first radio system by means of an antenna changeover switch 13 for the first radio system, and are directly switched and connected to the second radio system 12 by means of an antenna changeover switch 14 for the second radio system.

The antenna changeover switch 13 for the first radio system and the antenna changeover switch 14 for the second radio system are switched in response to a control signal 10a of a first switching control circuit 17 and a control signal 10b of a second switching control circuit 18. The antenna changeover switch 13 for the first radio system connects the first antenna 15 to the first radio system 11 by switching when the control signal 10a is H and the control signal 10b is L, and connects the second antenna 16 to the first radio system 11 by switching when the control signal 10a is L and the control signal 10b is H. Moreover, the antenna changeover switch 14 for the second radio system connects the second antenna 16 to the second radio system 12 by switching when the control signal 10a is H and the control signal 10b is L, and connects the first antenna 16 to the second radio system 12 by switching when the control signal 10a is L and the control signal 10b is H.

The control signal 10a and the control signal 10b have an inversion relationship with each other when the switching control of the antenna changeover switch 13 for the first radio system and the antenna changeover switch 14 for the second radio system is carried out. Therefore, the first switching control circuit 17 and the second switching control circuit 18 may be collected into one switching control circuit and the control signals 10a and 10b having the inversion relationship with each other may be output.

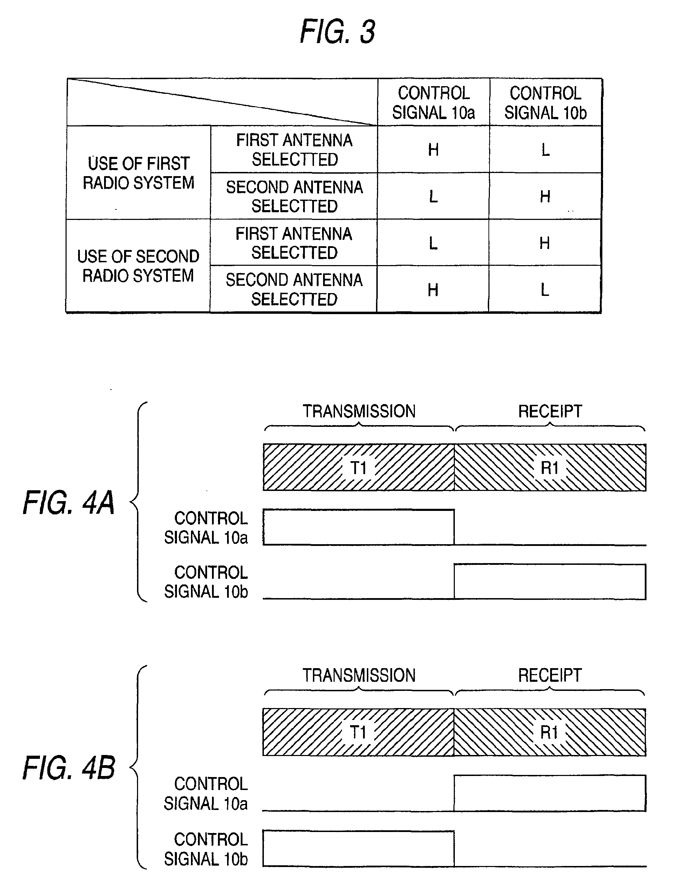

Fig. 3 shows the relationship between the control signals corresponding to the antenna to be connected to the radio system which is used. As shown in Fig. 3, during the use of the first radio system 12, the control signal 10a is set to be H and the control signal 10b is set to be L when the first antenna 15 is to be selected, and the control signal 10a is set to be L and the control signal 10b is set to be H when the second antenna 16 is to be selected. During the use of the second radio system, moreover, the control signal 10a is set to be L and the control signal 10b is set to be H when the first antenna 15 is to be selected, and the control signal 10a is set to be H and the control signal 10b is set to be L when the second antenna 16 is to be selected.

When one of the antennas is connected to one of the radio systems for use, a load impedance fluctuates so that a transmitted signal is reduced if the same antenna is connected to the other radio system. For example, in the case in which the control signal 10a is set to be H, the control signal 10b is set to be L and the first antenna 15 is connected to the first radio system during the use of the first radio system 12, the above problem arises when the first antenna 15 is also connected to the second radio system. In the composite radio apparatus in Fig. 1, however, if the control signal 10a is set to be H and the control signal 10b is set to be L, the second antenna 16 is connected to the second radio system 12 and the first antenna 15 is disconnected from the second radio system 12 so that the above problem does not arise.

Next, the operation of the composite radio apparatus in Fig. 1 will be described by taking, as an example, a switching operation in transmitting and receiving timings in a radio system using a time sharing method. Figs. 4A and 4B are diagrams showing the states of the control signals 10a and 10b in a transmitting slot T1 and a receiving slot R1 in the time sharing method. Fig. 4A shows a state obtained when the first radio system 11 is used and Fig. 4B shows a state obtained when the second radio system 12 is used, and both the drawings show the case in which the first antenna 15 is selected at time of a transmission and the second antenna 16 is selected at time of a receipt.

When the control signals 10a and 10b are brought into the state shown in Figs. 4A and 4B, the radio system to be used and the first antenna are connected to each other in the transmitting slot T1 and the radio system to be used and the second antenna are connected to each other in the receiving slot R1 during both the use of the first radio system 11 and the use of the second radio system 12.

In the composite radio apparatus shown in Fig. 1, in the case in which frequencies to be used by the two radio systems are different from each other, the mismatching of an impedance might be caused by the connection switching of the radio system through the antenna switching circuit, resulting in an increase in a loss.

Fig. 2 is a diagram showing the schematic structure of a composite radio apparatus according to a second embodiment of the invention, in which the mismatching of an impedance is not caused also when frequencies to be used by two radio systems included in the composite radio apparatus are different from each other. The composite radio apparatus of Fig. 2 is the same as the composite radio apparatus in Fig. 1 except that a first matching circuit 21 is provided between a first radio system 11 and an antenna changeover switch 13 for a first radio system and a second matching circuit 22 is provided between a second radio system 12 and an antenna changeover switch 14 for a second radio system.

The first matching circuit 21 serves to carry out frequency matching corresponding to a frequency to be used by the first radio system 11 and the second matching circuit 22 serves to carry out frequency matching corresponding to a frequency to be used by the second radio system 11. By thus providing the matching circuits 21 and 22 corresponding to the frequencies to be used by the respective radio systems between the radio system and the antenna changeover switch, it is possible to reduce a loss caused by the mismatching of the impedance also when the frequencies to be used by the two radio systems are different from each other.

While the first matching circuit 21 and the second matching circuit 22 are provided in Fig. 2, only one of them may be provided. In that case, a first antenna 15 and a second antenna 16 are set to correspond to a frequency to be used by the radio system on the side where the matching circuit is not provided.

As described above, according to the invention, it is possible to provide a composite radio apparatus capable of reducing a loss in the switching of the antenna and the radio system. Moreover, it is possible to provide a diversity switching method capable of reducing a loss in the switching of the antenna and the radio system in the composite radio apparatus.

According to the invention, furthermore, the matching circuits corresponding to the frequencies to be used by the respective radio systems are provided between each of the radio systems and the antenna changeover switch. Also in the case in which the frequencies to be used by the two radio systems constituting the composite radio apparatus are different from each other, consequently, it is possible to reduce a loss caused by the mismatching of an impedance in a diversity operation sharing the antenna.

## Claims

1. A composite radio apparatus having two radio systems, comprising:
two antennas to be shared for a diversity operation of the two radio systems; and
two antenna changeover switches for switching the two antennas,
wherein the two antenna changeover switches serve to directly connect the two antennas to respective input/output sections of the two radio systems.

2. The composite radio apparatus according to claim 1, wherein the two antenna changeover switches are operated such that one of the antenna changeover switches connects one of the two antennas to the input/output section of one of the two radio systems when the other antenna changeover switch connects the other antenna to the input/output section of the other radio system.

3. The composite radio apparatus according to claim 2, wherein one of the antenna changeover switches serves to connect, by switching, the two antennas to either of the radio systems which is being operated.

4. The composite radio apparatus according to any of claims 1 to 3, further comprising a matching circuit corresponding to the radio system between at least one of the antenna changeover switches and the input/output section of the radio system.

5. A diversity switching method in a composite radio apparatus comprising two radio systems and two antennas to be shared in a diversity operation of the two radio systems,
directly connecting one of the two antennas to an input/output section of one of the radio systems which is carrying out the diversity operation; and
directly connecting the other antenna to an input/output section of the other radio system.
